# EUROPEAN PATENT SPECIFICATION

(11) **EP 4 369 956 B1**
(45) Date of publication and mention of the grant of the patent: **25.12.2024**
(21) Application number: 22744203.5
(22) Date of filing: 14.07.2022
(51) Int. Cl.: A24C 5/34

(54) **A MEASURING SYSTEM AND A METHOD FOR DETERMINING PARAMETERS OF A MULTI-SEGMENT ROD-LIKE ARTICLE**
MESSSYSTEM UND VERFAHREN ZUR ERFASSUNG VON PARAMETER EINES MEHRTEILIGEN STABFÖRMIGEN ARTIKELS
SYSTÈME ET PROCÉDÉ DE MESURE DE PARAMÈTRES D'ARTICLES EN FORME DE TIGE À SEGMENTS MULTIPLES

(30) Priority: 14.07.2021 PL 43846921
(43) Date of publication of application: 22.05.2024
(73) Proprietor: International Tobacco Machinery Poland SP. Z O.O., 26-600 Radom (PL)
(72) Inventor: CIESLIKOWSKI, Bartosz, 26-400 Przysucha (PL)
(74) Representative: Kancelaria Eupatent.pl Sp. z.o.o
(86) International application number: PCT/EP2022/069817
(87) International publication number: WO 2023/285634

(56) References cited:
- EP-A1- 3 654 275
- GB-A- 2 179 444
- US-A- 5 406 376
- US-A1- 2007 091 326

## Description

### TECHNICAL FIELD

The present invention relates to a measuring system and a method for determining parameters of a multi-segment rod-like article.

### BACKGROUND

In tobacco industry a variety of rod-like articles are manufactured, such as cigarettes with a multi-segment mouthpiece, multi-segment filter rods. Segments of such articles are typically produced in a continuous process by cutting a continuous rod into individual segments or cutting the rod into bars and then cutting the bars into single segments. The manufacturing process requires production of semi-final products that comprise both filled and tubular segments, wherein the filled segments may be filled with a variety of filler materials used in the tobacco industry, such as tobacco material, processed tobacco material, filtering material or material necessary to form segments of special properties, such as segments through the smoke in the final product is not filtered, but only flows and is cooled. Both the finished tobacco products and the semi-final products may end with a tubular segment, i.e. a hollow segment without a filling, wherein the tubular segment may be thin-walled or a thick-walled segment. From the point of view of the quality of such products and semi-final products, it is important that the tubular end segments have a length whose tolerance range is narrow, i.e. that for the user of the products, they have the same length. Currently there are no systems that allow direct illumination of the front surface of a segment it the multi-segment rod-like article, where the scattering of the light in the material of the segment would enable the measurement of article parameters, including segment lengths. There is a demand on the market for a measuring system that allows additional measurements in addition to measuring the length of a tubular segment.

US5406376 discloses an apparatus for testing the end portions of cigarettes to detect end portions containing insufficient quantities of tobacco, which has a conveyor which transports the cigarettes sideways past at least two testing stations each of which accommodates a discrete capacitive and/or photoelectronic testing unit.

### SUMMARY OF THE INVENTION

There is a need to efficiently produce multi-segment rod-like articles so as to ensure precise control over the production of individual segments, in particular end segments.

The object of the invention is a measuring system and a method for measuring parameters of a multi-segment rod-like article according to the appended claims.

The solution according to the invention enables precise measurements of products and semi-final products, with particular emphasis on the end segments. The high measurement precision is provided by the fact that the beam of high intensity of non-scattered light illuminates directly the front surface of the inner filled segment, and only light scattering through the material of this segment transmits information about the segment and its position. In particular, it makes it possible to verify geometrical parameters, for example the length of the tubular segments, the length of the rod-like article, and moreover, it makes it possible to verify the quality of the edge, for example the break of this end edge, and also to verify the position of the inner segment. It is suitable for the inspection of various types of products where end segments are hollow.

### BRIEF DESCRIPTION OF DRAWINGS

The object of the invention is described in more detail with reference to embodiments shown in the drawing, wherein:
Fig. 1 shows an example of a multi-segment five-segment rod-like article,
Figs. 1a, 1b show registered images of the article from Fig. 1,
Fig. 2 shows an example of a multi-segment three-segment rod-like article,
Fig. 2a shows a registered image of the article of Fig. 2,
Fig. 3 shows a multi-segment three-segment rod-like article in a form of a cigarette,
Fig. 3a shows a registered image of the article of Fig. 3,
Figs. 4, 5 show a first embodiment of a measuring system,
Fig. 6 shows a second embodiment of a measuring system.

### DETAILED DESCRIPTION

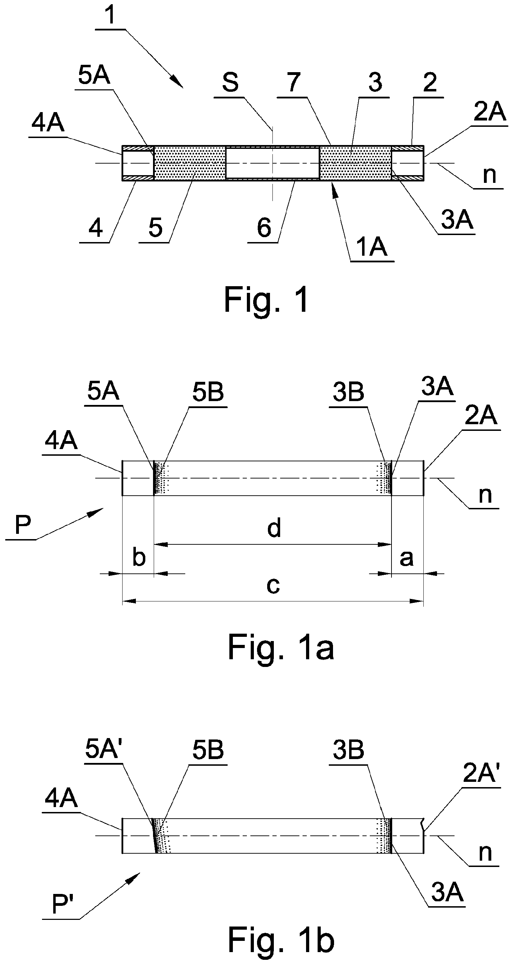

The present invention relates to the determination of parameters of multi-segment rod-like articles comprising at least two segments, which will be referred to herein as multi-segment rod-like articles. The multi-segment rod-like article 1 shown in Fig. 1 is a five-segment article comprising a first end segment 2, a first inner segment 3, a second end segment 4, a second inner segment 5, and a middle segment 6. The first end segment 2 has a form of a tube, it is the first tubular end segment 2, the second end segment 4 also has a form of a tube, this is the second tubular end segment 4. Both the first tubular end segment 2 and the second tubular end segment 4 may be made of paper or thin cardboard. The multi-segment rod-like article 1 in Fig. 1 has the thickness shown greater than in the other embodiments. Moreover, it may be in the form of a thick-walled tube made of a filtering material or other material. The tubular segment is open on both sides, wherein the finished rod-like article does not contain any structural or filling elements inside the tubular segment, so that the light beam may pass unimpeded through the interior of the tubular segment. The thick-walled tubular segment may have a circular, square, triangular opening or in a cross-section it may have a shape of any other figure.

The first inner segment 3 is a filled segment, and similarly the second inner segment 5 is a filled segment. The filled segments 3, 5 are in the form of a cylinder comprising a filler material used in the tobacco industry. The filler material may be a filtering material, a shredded tobacco material, a processed tobacco material, a material with aromatic substances etc. The materials used in the tobacco industry are typically transmissive to electromagnetic radiation both in the visible and the invisible range. The fibers of the filtering material are positioned in such a way that these fibers connect at multiple points to form a spatial permeable structure, the light of the light beam incident on such a structure is scattered in different directions. In the following description, a beam of electromagnetic radiation will also be referred to as a light beam, for simplicity. In the presented example of a five-segment rod-like article 1, the middle segment 6 has the form of a tube, wherein the middle segment 6 may be made of any material, and it may be filled. The segments of the multi-segment rod-like article 1 are typically wrapped over the entire length of the article in a wrapper material 7, for example a tissue paper. Filled segments 3 and 5 may have their own wrapper material. The segments may be formed in a continuous process by cutting the continuous rod into individual segments or cutting the continuous rod into bars and then into individual segments, the segments may be filled in a discontinuous process. The thicknesses of the wrapper materials are not shown.

The presented five-segment rod-like article 1 is an article symmetrical with respect to a plane S, perpendicular to an axis n of the five-segment rod-like article 1. The article may be split along the plane S into two identical multi-segment rod-like articles with a length equal to half the length of the five-segment rod-like article 1. The resultant multi-segment rod-like article comprises the tubular end segment 2 or 4, the filled segment 3 or 5, and a half of the middle segment 6.

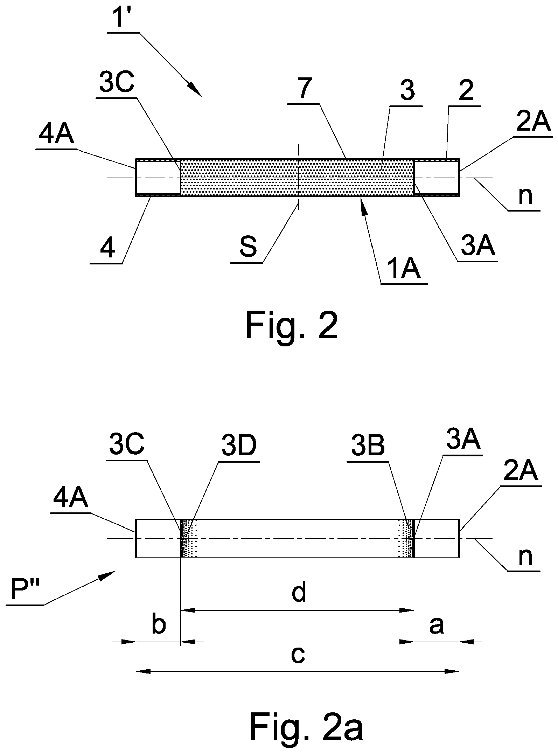

Fig. 2 shows a three-segment rod-like article 1' comprising the first end segment 2, the filled segment 3 and the second end segment 4. The first end segment 2 is in the form of a tube, it is the first tubular end segment 2, the second end segment 4 is also in the form of a tube, this is the second tubular end segment 4. As with the article of Fig. 1, the first tubular end segment 2 and the second tubular end segment 4 may be made of any material and may have arbitrary wall thickness. The three-segment rod-like article 1', is also the article symmetrical with respect to the plane S perpendicular to the axis n of the article.

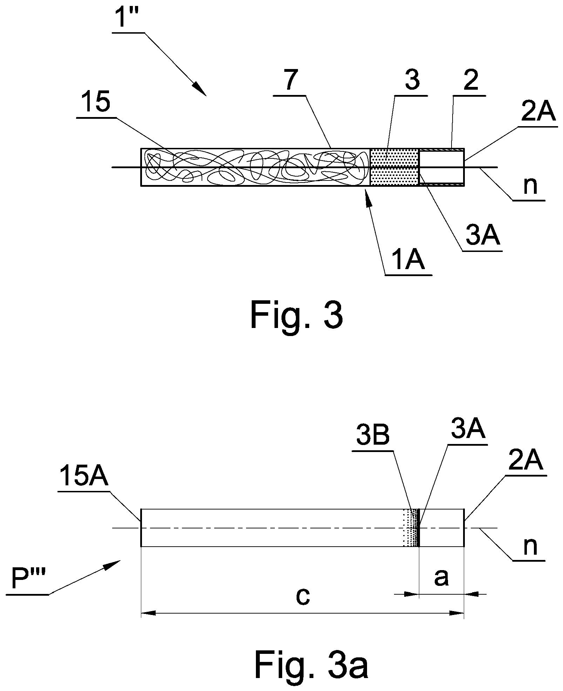

Fig. 3 shows a three-segment rod-like article 1" that is in the form of a cigarette and comprises a first tubular end segment 2 and two filled segments: the filled segment 3 comprising filtering material and a segment 15 comprising shredded tobacco.

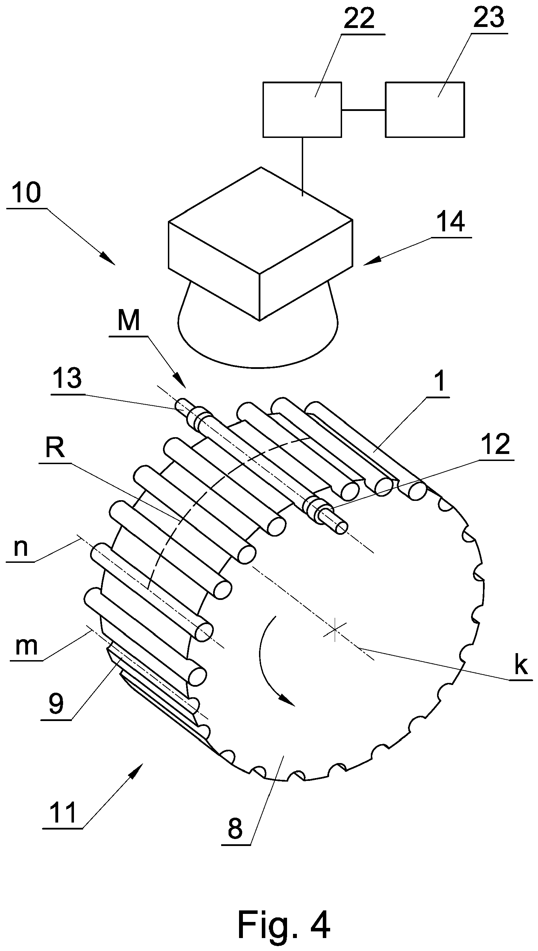

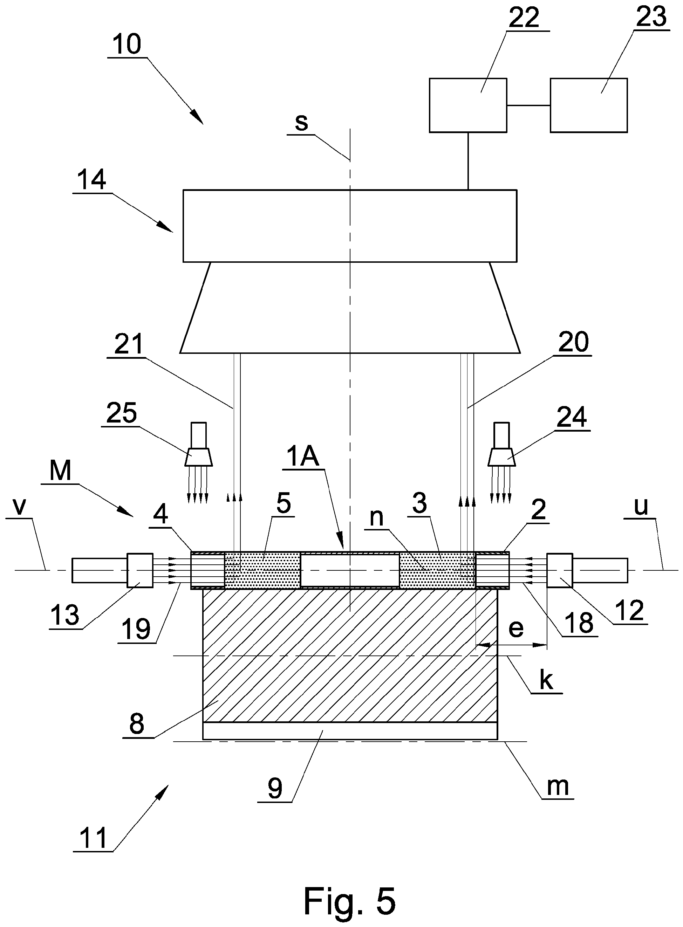

The measuring system 10 shown in the embodiment in Fig. 4 comprises a transporting device 11, a first illuminating device 12, a second illuminating device 13, and a registering device 14 for capturing an image. The transporting device 11 may be in the form of a drum conveyor 8 provided with transport flutes 9 adapted to receive and transport multi-segment rod-like articles 1 (alternatively, the transporting device may be in the form of a belt conveyor provided with flutes for multi-segment rod-like articles). The drum conveyor 8 has an axis of rotation k and rotates in the direction shown by the arrow. The transport flute 9 is in the form of a cylindrical recess with an axis m, the multi-segment rod-like article 1 with a longitudinal axis n is placed in the transport flute 9 such that the axis n of the multi-segment rod-like article 1 substantially coincides with the axis m of the transport flute 9. The measuring system 10 is also shown in Fig. 5, where a section through the drum conveyor 8 is visible (axis of rotation k lies in the plane of the section) and the multi-segment rod-like article 1 as shown in Fig. 1 is in measurement position M. The first illuminating device 12 generates a first beam of light 18 with an axis u, wherein the axis u is disposed parallel to the axis n of the multi-segment rod-like article 1, moreover, the axis n and the axis u may substantially coincide when the multi-segment rod-like article 1 is at measurement position M, in which it is illuminated by the first illuminating device 12. The second illuminating device 13 generates a second light beam 19 with an axis v, wherein the axis v is located in parallel to the axis n of the multi-segment rod-like article 1, moreover, the axis n and the axis v may substantially coincide when the rod-like article 1 is in measurement position M, in which it is illuminated by the second illuminating device 13. The registering device 14 for registering the image is located above the measurement position M. The first illuminating device 12 and the second illuminating device 13 may be positioned such that the axis u of the first light beam 18 from the first illuminating device and the axis v of the second light beam 19 from the second illuminating device coincide. The registering device 14 may be in the form of a camera and may include several image registering devices.

At measurement position M, the first light beam 18 from the first illuminating device 12 passes through the interior of the first tubular end segment 2 and illuminates the first filled segment 3. The light that has passed through the first tubular end segment 2 is scattered by the material of the first filled segment 3 and partially passes through the wrapper material 7, wherein a part of the scattered beam that reaches the registering device 14 is designated as 20. The second light beam 19 from the second illuminating device 13 passes through the interior of the second tubular end segment 4 and illuminates the second filled segment 5. The light, which has passed through the first tubular end segment 2 is scattered and partially penetrates through the wrapper material 7, the part of such scattered beam that reaches the registering device 14 is indicated as 21. The first light beam 18 passes centrally through the first tubular end segment 2, the second light beam 19 passes centrally through the second tubular end segment 4, wherein it is possible to illuminate the filled segment not centrally, possibly at a slight angle. After passing through the tubular end segments 2, 4, both the first light beam 18 and the second light beam 19 and are not scattered and their intensity is maintained.

The registering device 14 receives ambient light reflected from the side surface 1A of the multi-segment rod-like article as well as the scattered light from the illuminating devices 12 and 13. Fig. 1a shows a registered image P of the multi-segment rod-like article 1. The image P shows an exemplary outline of the multi-segment rod-like article 1, wherein the bold lines indicate the edges and surfaces of the segments, where 2A - an edge of the first tubular end segment 2, 3A - a front surface of the first filled segment 3, 4A - an edge of the second tubular end segment 4, 5A - a front surface of the second filled segment 5. The position of the first front surface 3A of the first filled segment 3 is defined as the boundary of the scattering region 3B where the first light beam 18 is scattered by the material of the first filled segment 3. The position of the second front surface 5A of the second filled segment 5 is defined as the boundary of the scattering region 5B in which the second light beam 19 is scattered by the material of the second filled segment 5. The image P is processed in a processing unit 22. The processing unit 22 is configured to determine the parameters of the multi-segment rod-like article 1 such as, for example, a length a of the first tubular end segment 2 measured as the distance between the edge 2A of the first tubular end segment 2 and the front surface 3A of the first filled segment 3, a length b of the second tubular end segment 4 measured as the distance between the edge 4A of the second tubular end segment 4 and the front surface 5A of the second filled segment 5, a length c of the multi-segment rod-like article 1 measured as the distance between the edges 2A and 4A, and a distance d between front surfaces 3A and 5A. The processing unit 22 is configured to detect the position of the first filled segment 3 and the second filled segment 5, a defective position is defined as a position of a line corresponding to the front surface 3A of the first filled segment 3 other than perpendicular to the axis n of the multi-segment rod-like article 1, a defective position is defined as a position of a line corresponding to the surface 5A other than perpendicular to the longitudinal axis n of the multi-segment rod-like article 1. Information about the determined parameters of the rod-like article 1 is sent to a controlling unit 23, the controlling unit 23 may send a signal to reject the defective multi-segment rod-like article 1. Image quality (contrast enhancement, image brightness) may be improved by the use of additional illumination in the form of light sources 24, 25 illuminating the side surface 1A of the multi-segment rod-like article 1. Cameras are known which are equipped with lamps arranged around the camera lens for illumination of the camera field of view.

An example of a manufacturing process parameter is a distance e between the front surface 3A of the first filled segment 3 and the first illumination device 12. With the first illumination device in a fixed position, a change in the distance e may indicate an incorrect position of the multi-segment rod-like article 1 in the transport flute 9 in an axial direction along the axis m.

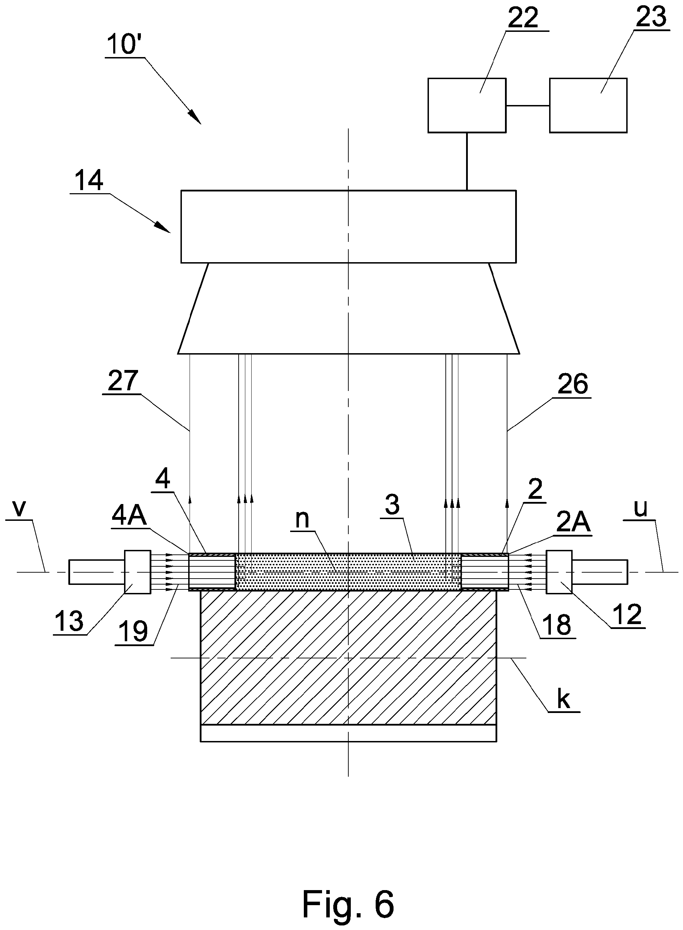

In the embodiment shown in Fig. 5 and in the below-discussed embodiment presented in Fig. 6, symmetrical semi-final products are shown in the form of the rod-like articles ended on two sides by the tubular end segments 2 and 4. The measuring system 10 according to the invention may be configured for multi-segment asymmetric rod-like articles ended on one side with a tubular segment. For example, the measuring system 10 may be equipped with one illumination device, if the product whose parameters are measured is a cigarette provided with a mouthpiece ended with a tubular segment, for example shown in Fig. 3.

Fig. 1b shows an image P' of a defective multi-segment rod-like article which has a broken line representing the first edge 2A', indicating deformation of the first edge of the first tubular end segment 2, and furthermore the light scattered by the second filled segment 5 forms a line corresponding to the front surface 5A' positioned not perpendicularly to the axis n of the multi-segment rod-like article 1, which indicates a deformation or defective position of the second filled segment 5, for example rotation of the filled segment 5 when a filled segment with a length close to the segment diameter is used.

An image P" shown in Fig. 2 for a three-segment rod-like article is analogous to the image P shown in Fig. 1 for a five-segment rod-like article. The scattering regions 3B, 5B, 3D registered in the images may differ depending on the type of material of the filled segments 3, 5 and the wall thickness of the tubular end segments 2, 4. Fig. 3a shows an exemplary image P‴ for the multi-segment rod-like article 1' in the form of a cigarette.

Fig. 6 shows a second embodiment of the measuring system 10' wherein the first light beam 18 partially passes through the first tubular end segment 2 and illuminates the first filled segment 3, further illuminating the first edge 2A of the first tubular end segment 2. The light incident on the first edge 2A is scattered and reaches the registering device 14 as a beam 26. The second light beam 19 partially passes through the second tubular end segment 4 and illuminates the second filled segment 5, and further illuminates the second edge 4A of the second tubular end segment 4. The light incident on the second edge 4A is scattered and reaches the registering device 14 as a beam 27. The image P of the multi-segment rod-like article 1 is formed, inter alia, by the light reflected and partially scattered by the first edge 2A and by the second edge 4A and the light scattered by the first filled segment 3 and by the second filled segment 5.

The present invention relates both to the multi-segment rod-like article with the two ends in a form of tubular segments, and to the multi-segment rod-like article of with only one end as a tubular segment, such as a cigarette, the mouthpiece of which is ended by a paper or cardboard tube, possibly a thick-walled tube for example made of acetate.

## Claims

1. A measuring system for measuring parameters of a multi-segment rod-like article (1, 1', 1") comprising at least one filled segment (3, 5) and at least one tubular end segment (2, 4), wherein the measuring system comprises:
- a transporting device (11) for transferring the multi-segment rod-like article (1, 1', 1") along a path of movement (R) transversely to an axis (n) of the multi-segment rod-like article (1, 1', 1"), wherein the transporting device (11) is provided with transport flutes (9);
- at least one illuminating device (12, 13);
**characterized in that**:
- the at least one illuminating device (12, 13) is configured for generating a light beam (18, 19) for illuminating a front surface (3A, 5A, 3C) of the filled segment (3, 5) by passing through the interior of the tubular end segment (2, 4);
- the measuring system further comprises:
- a registering device (14) for registering an image (P, P", P‴) of the multi-segment rod-like article (1, 1', 1"), wherein the registering device (14) is configured to receive light of the light beam (18, 19) scattered by the material of the filled segment (3, 5), which penetrates through a material of a wrapper (7) of the multi-segment rod-like article (1, 1', 1") and reaches the registering device (14), forming an outline of the front surface (3A, 5A, 3C) of the filled segment (3, 5) in the image (P, P", P‴); and
- a processing unit (22) configured to process the image (P, P", P‴) of the multi-segment rod-like article (1, 1', 1") registered by the registering device (14) and to determine the production process parameters and/or parameters of the multi-segment rod-like article (1, 1', 1").

2. The system according to claim 1, wherein the determined parameter is a length (a, b) of the tubular end segment (2, 4).

3. The system according to claim 1 or 2, wherein the determined parameter is a length (c) of the multi-segment rod-like article (1, 1', 1").

4. The system according to any of claims 1 or 3, wherein the determined parameter is a distance (e) between the front surface (3A, 5A) and the illuminating device (12, 13).

5. The system according to any of claims 1 or 4, wherein the light beam (18, 19) is directed to illuminate an edge (2A, 4A) of the tubular end segment (2, 4).

6. The system according to claim 5, wherein the determined parameter is quality of the edge (2A, 4A) of the multi-segment rod-like article (1, 1', 1").

7. The system according to any of claims 1 or 6, wherein the system comprises a third illuminating device (24, 25) for illuminating a side surface (1A) of the multi-segment rod-like article (1, 1', 1").

8. The system according to any of previous claims, wherein the determined parameter is a position of the first filled segment (3, 5).

9. The system according to claim 1, wherein the system is configured to measure the parameters of the multi-segment rod-like article (1, 1', 1") comprising two filled segments (3, 5) and two tubular end segments (2, 4), wherein the system comprises a first illuminating device (12) for illuminating the first filled segment (3) through the first tubular end segment (2) and a second illuminating device (13) for illuminating the second filled segment (5) through the second tubular end segment (4), wherein the registering device (14) is configured to register the outline of the first front surface (3A) by receiving light from the first light beam (18) scattered on the first filled segment (3), and the registering device (14) is configured to register the outline of the second front surface (5A) by receiving light from the second light beam (19) scattered on the second filled segment (5).

10. The system according to claim 9, wherein the determined parameter is a distance (d) between the first front surface (3A) and the second front surface (5A).

11. A method for determining parameters of a multi-segment rod-like article (1, 1', 1") comprising at least one filled segment (3, 5) and at least one tubular end segment (2, 4), wherein the method comprises the steps of:
- transferring the multi-segment rod-like article (1, 1', 1") along a path of movement (R) transversely to an axis (n) of the multi-segment rod-like article (1, 1', 1") near an the- illuminating device (12, 13) to such an arrangement, in which when illuminating the filled segment (3, 5) the light beam from the illuminating device directly illuminates the front surface (3A, 5A) of the filled segment (3, 5), wherein the light beam (18, 19) passes through the tubular end segment (2, 4);
- registering an image (P, P", P‴) of the multi-segment rod-like article (1, 1', 1"), wherein the image (P, P", P‴) is formed by receiving light (20, 21) of the light beam (18, 19) scattered by the filled segment material (3, 5) and passing through the wrapper material (7) that forms on the image (P, P", P‴) an outline of the front surface (3A, 5A) of the filled segment (3, 5); and
- determining parameters of the production process and/or parameters of the multi-segment rod-like article (1, 1', 1") on the basis of the registered image (P, P", P‴) of the multi-segment rod-like article (1, 1', 1").

12. The method according to claim 11, comprising the step of determining a length (a, b) of the tubular end segment (2, 4) and/or a length (c) of the multi-segment rod-like article (1, 1', 1").

13. The method according to any of claims 11 to 12, comprising the step of illuminating the edge (2A, 4A) of the tubular end segment (2, 4).

14. The method according to claim 11 comprising the step of illuminating the side surface (1A) of the multi-segment rod-like article (1, 1', 1").

15. The method according to any of claims 11 to 14, comprising the step of measuring parameters of the multi-segment rod-like article (1, 1', 1") comprising two filled segments (3, 5) and two tubular end segments (2, 4), wherein the light scattered by the material of the first filled segment (3) is registered in order to form the outline of the first front surface (3A) of the first filled segment (3), and the light scattered by the material of the second filled segment (5) is registered in order to form the outline of the second front surface (5A) of the second filled segment (5).

## Patentansprüche

1. Messsystem zum Messen von Parametern eines mehrteiligen stabförmigen Artikels (1, 1', 1"), der zumindest ein gefülltes Segment (3, 5) und zumindest ein rohrartiges Endsegment (2, 4) umfasst, wobei das Messsystem Folgendes umfasst:
- eine Transportvorrichtung (11) zum Überführen des mehrteiligen stabförmigen Artikels (1, 1', 1") entlang einer Bewegungsbahn (R) quer zu einer Achse (n) des mehrteiligen stabförmigen Artikels (1, 1', 1"), wobei die Transportvorrichtung (11) mit Transportrillen (9) bereitgestellt ist;
- zumindest eine Beleuchtungsvorrichtung (12, 13);
**dadurch gekennzeichnet, dass**:
- die zumindest eine Beleuchtungsvorrichtung (12, 13) konfiguriert ist, um einen Lichtstrahl (18, 19) zum Beleuchten einer Vorderfläche (3A, 5A, 3C) des gefüllten Segments (3, 5) durch Durchtreten durch das Innere des rohrartigen Endsegments (2, 4) zu erzeugen;
- das Messsystem ferner Folgendes umfasst:
- eine Registrierungsvorrichtung (14) zum Registrieren eines Bildes (P, P", P‴) des mehrteiligen stabförmigen Artikels (1, 1', 1"), wobei die Registrierungsvorrichtung (14) konfiguriert ist, um Licht des Lichtstrahls (18, 19) zu empfangen, das durch das Material des gefüllten Segments (3, 5) gestreut wird, das ein Material einer Umhüllung (7) des mehrteiligen stabförmigen Artikels (1, 1', 1") durchdringt und die Registrierungsvorrichtung (14) erreicht, wodurch ein Umriss der Vorderfläche (3A, 5A, 3C) des gefüllten Segments (3, 5) in dem Bild (P, P", P‴) gebildet wird; und
- eine Verarbeitungseinheit (22), die konfiguriert ist, um das Bild (P, P", P‴) des mehrteiligen stabförmigen Artikels (1, 1', 1"), das durch die Registrierungsvorrichtung (14) registriert wird, zu verarbeiten und um die Produktionsprozessparameter und/oder Parameter des mehrteiligen stabförmigen Artikels (1, 1', 1") zu erfassen.

2. System nach Anspruch 1, wobei der erfasste Parameter eine Länge (a, b) des rohrartigen Endsegments (2, 4) ist.

3. System nach Anspruch 1 oder 2, wobei der erfasste Parameter eine Länge (c) des mehrteiligen stabförmigen Artikels (1, 1', 1") ist.

4. System nach einem der Ansprüche 1 oder 3, wobei der erfasste Parameter ein Abstand (e) zwischen der Vorderfläche (3A, 5A) und der Beleuchtungsvorrichtung (12, 13) ist.

5. System nach einem der Ansprüche 1 oder 4, wobei der Lichtstrahl (18, 19) gerichtet ist, um eine Kante (2A, 4A) des rohrartigen Endsegments (2, 4) zu beleuchten.

6. System nach Anspruch 5, wobei der erfasste Parameter Qualität der Kante (2A, 4A) des mehrteiligen stabförmigen Artikels (1, 1', 1") ist.

7. System nach einem der Ansprüche 1 oder 6, wobei das System eine dritte Beleuchtungsvorrichtung (24, 25) zum Beleuchten einer Seitenfläche (1A) des mehrteiligen stabförmigen Artikels (1, 1', 1") umfasst.

8. System nach einem der vorhergehenden Ansprüche, wobei der erfasste Parameter eine Position des ersten gefüllten Segments (3, 5) ist.

9. System nach Anspruch 1, wobei das System konfiguriert ist, um die Parameter des mehrteiligen stabförmigen Artikels (1, 1', 1") zu messen, der zwei gefüllte Segmente (3, 5) und zwei rohrartige Endsegmente (2, 4) umfasst, wobei das System eine erste Beleuchtungsvorrichtung (12) zum Beleuchten des ersten gefüllten Segments (3) durch das erste rohrartige Endsegment (2) und eine zweite Beleuchtungsvorrichtung (13) zum Beleuchten des zweiten gefüllten Segments (5) durch das zweite rohrartige Endsegment (4) umfasst, wobei die Registrierungsvorrichtung (14) konfiguriert ist, um den Umriss der ersten Vorderfläche (3A) durch Empfangen von Licht von dem ersten Lichtstrahl (18) zu registrieren, das auf dem ersten gefüllten Segment (3) gestreut wird, und die Registrierungsvorrichtung (14) konfiguriert ist, um den Umriss der zweiten Vorderfläche (5A) durch Empfangen von Licht von dem zweiten Lichtstrahl (19) zu registrieren, das auf dem zweiten gefüllten Segment (5) gestreut wird.

10. System nach Anspruch 9, wobei der erfasste Parameter ein Abstand (d) zwischen der ersten Vorderfläche (3A) und der zweiten Vorderfläche (5A) ist.

11. Verfahren zum Erfassen von Parametern eines mehrteiligen stabförmigen Artikels (1, 1', 1"), der zumindest ein gefülltes Segment (3, 5) und zumindest ein rohrartiges Endsegment (2, 4) umfasst, wobei das Verfahren die folgenden Schritte umfasst:
- Überführen des mehrteiligen stabförmigen Artikels (1, 1', 1") entlang einer Bewegungsbahn (R) quer zu einer Achse (n) des mehrteiligen stabförmigen Artikels (1, 1', 1") nahe einer Beleuchtungsvorrichtung (12, 13) zu einer solchen Anordnung, in der beim Beleuchten des gefüllten Segments (3, 5) der Lichtstrahl von der Beleuchtungsvorrichtung die Vorderfläche (3A, 5A) des gefüllten Segments (3, 5) direkt beleuchtet, wobei der Lichtstrahl (18, 19) durch das rohrartige Endsegment (2, 4) durchtritt;
- Registrieren eines Bildes (P, P", P‴) des mehrteiligen stabförmigen Artikels (1, 1', 1"), wobei das Bild (P, P", P‴) durch Empfangen von Licht (20, 21) des Lichtstrahls (18, 19) gebildet wird, das durch das gefüllte Segmentmaterial (3, 5) gestreut wird und durch das Umhüllungsmaterial (7) durchtritt, das auf dem Bild (P, P", P‴) einen Umriss der Vorderfläche (3A, 5A) des gefüllten Segments (3, 5) bildet; und
- Erfassen von Parametern des Produktionsprozesses und/oder Parametern des mehrteiligen stabförmigen Artikels (1, 1', 1") auf der Basis des registrierten Bildes (P, P", P‴) des mehrteiligen stabförmigen Artikels (1, 1', 1").

12. Verfahren nach Anspruch 11, umfassend den Schritt des Erfassens einer Länge (a, b) des rohrartigen Endsegments (2, 4) und/oder einer Länge (c) des mehrteiligen stabförmigen Artikels (1, 1', 1").

13. Verfahren nach einem der Ansprüche 11 bis 12, umfassend den Schritt des Beleuchtens der Kante (2A, 4A) des rohrartigen Endsegments (2, 4).

14. Verfahren nach Anspruch 11, umfassend den Schritt des Beleuchtens der Seitenfläche (1A) des mehrteiligen stabförmigen Artikels (1, 1', 1").

15. Verfahren nach einem der Ansprüche 11 bis 14, umfassend den Schritt des Messens von Parametern des mehrteiligen stabförmigen Artikels (1, 1', 1"), der zwei gefüllte Segmente (3, 5) und zwei rohrartige Endsegmente (2, 4) umfasst, wobei das Licht, das durch das Material des ersten gefüllten Segments (3) gestreut wird, registriert wird, um den Umriss der ersten Vorderfläche (3A) des ersten gefüllten Segments (3) zu bilden, und das Licht, das durch das Material des zweiten gefüllten Segments (5) gestreut wird, registriert wird, um den Umriss der zweiten Vorderfläche (5A) des zweiten gefüllten Segments (5) zu bilden.

## Revendications

1. Système de mesure destiné à mesurer des paramètres d'un article en forme de tige à segments multiples (1, 1', 1") comprenant au moins un segment rempli (3, 5) et au moins un segment d'extrémité tubulaire (2, 4), ledit système de mesure comprenant :
- un dispositif de transport (11) destiné à transférer l'article en forme de tige à segments multiples (1, 1', 1") le long d'un trajet de déplacement (R) perpendiculaire à un axe (n) de l'article en forme de tige à segments multiples (1, 1', 1"), ledit dispositif de transport (11) étant doté de cannelures de transport (9) ;
- au moins un dispositif d'éclairage (12, 13) ;
**caractérisé en ce que** :
- le au moins un dispositif d'éclairage (12, 13) est conçu pour générer un faisceau lumineux (18, 19) destiné à éclairer une surface avant (3A, 5A, 3C) du segment rempli (3, 5) en passant à travers l'intérieur des segments d'extrémité tubulaires (2, 4) ;
- le système de mesure comprend en outre :
- un dispositif d'enregistrement (14) pour enregistrer une image (P, P", P'") de l'article en forme de tige à segments multiples (1, 1', 1"), ledit dispositif d'enregistrement (14) étant configuré pour recevoir la lumière du faisceau lumineux (18, 19) diffusée par le matériau du segment rempli (3, 5), qui pénètre à travers un matériau d'une enveloppe (7) de l'article en forme de tige à segments multiples (1, 1', 1") et atteint le dispositif d'enregistrement (14), formant un contour de la surface avant (3A, 5A, 3C) du segment rempli (3, 5) dans l'image (P, P", P‴); et
- une unité de traitement (22) configurée pour traiter l'image (P, P", P'") de l'article en forme de tige à segments multiples (1, 1', 1") enregistré par le dispositif d'enregistrement (14) et pour déterminer les paramètres de processus de production et/ou des paramètres de l'article en forme de tige à segments multiples (1, 1', 1").

2. Système selon la revendication 1, ledit paramètre déterminé étant une longueur (a, b) du segment d'extrémité tubulaire (2, 4).

3. Système selon la revendication 1 ou 2, ledit paramètre déterminé étant une longueur (c) de l'article en forme de tige à segments multiples (1, 1', 1").

4. Système selon l'une quelconque des revendications 1 ou 3, ledit paramètre déterminé étant une distance (e) entre la surface avant (3A, 5A) et le dispositif d'éclairage (12, 13).

5. Système selon l'une quelconque des revendications 1 ou 4, ledit faisceau lumineux (18, 19) étant dirigé pour éclairer un bord (2A, 4A) du segment d'extrémité tubulaire (2, 4).

6. Système selon la revendication 5, ledit paramètre déterminé étant la qualité du bord (2A, 4A) de l'article en forme de tige à segments multiples (1, 1', 1").

7. Système selon l'une quelconque des revendications 1 ou 6, ledit système comprenant un troisième dispositif d'éclairage (24, 25) destiné à éclairer une surface latérale (1A) de l'article en forme de tige à segments multiples (1, 1', 1").

8. Système selon l'une quelconque des revendications précédentes, ledit paramètre déterminé étant une position du premier segment rempli (3, 5).

9. Système selon la revendication 1, ledit système étant configuré pour mesurer les paramètres de l'article en forme de tige à segments multiples (1, 1', 1") comprenant deux segments remplis (3, 5) et deux segments d'extrémité tubulaires (2, 4), ledit système comprenant un premier dispositif d'éclairage (12) destiné à éclairer le premier segment rempli (3) à travers le premier segment d'extrémité tubulaire (2) et un deuxième dispositif d'éclairage (13) destiné à éclairer le second segment rempli (5) à travers le second segment d'extrémité tubulaire (4), ledit dispositif d'enregistrement (14) étant configuré pour enregistrer le contour de la première surface avant (3A) en recevant la lumière en provenance du premier faisceau lumineux (18) diffusé sur le premier segment rempli (3), et ledit dispositif d'enregistrement (14) étant configuré pour enregistrer le contour de la seconde surface avant (5A) en recevant la lumière en provenance du second faisceau lumineux (19) diffusée sur le second segment rempli (5).

10. Système selon la revendication 9, ledit paramètre déterminé étant une distance (d) entre la première surface avant (3A) et la seconde surface avant (5A).

11. Procédé permettant la détermination de paramètres d'un article en forme de tige à segments multiples (1, 1', 1") comprenant au moins un segment rempli (3, 5) et au moins un segment d'extrémité tubulaire (2, 4), ledit procédé comprenant les étapes de :
- transfert de l'article en forme de tige à segments multiples (1, 1', 1") le long d'un trajet de déplacement (R) transversal à un axe (n) de l'article en forme de tige à segments multiples (1, 1', 1") à proximité d'un dispositif d'éclairage (12, 13) jusqu'à un tel agencement, dans lequel lors de l'éclairage du segment rempli (3, 5), le faisceau lumineux en provenance du dispositif d'éclairage éclaire directement la surface avant (3A, 5A) du segment rempli (3, 5), ledit faisceau lumineux (18, 19) passant à travers le segment d'extrémité tubulaire (2, 4) ;
- enregistrement d'une image (P, P", P'") de l'article en forme de tige à segments multiples (1, 1', 1"), l'image (P, P", P'") étant formée en recevant la lumière (20, 21) du faisceau lumineux (18, 19) diffusée par le matériau de segment rempli (3, 5) et passant à travers le matériau d'enveloppe (7) qui forme sur l'image (P, P", P'") un contour de la surface avant (3A, 5A) du segment rempli (3, 5) ; et
- détermination de paramètres du processus de production et/ou de paramètres de l'article en forme de tige à segments multiples (1, 1', 1") sur la base de l'image enregistrée (P, P", P'") de l'article en forme de tige à segments multiples (1, 1', 1").

12. Procédé selon la revendication 11, comprenant l'étape de détermination d'une longueur (a, b) du segment d'extrémité tubulaire (2, 4) et/ou d'une longueur (c) de l'article en forme de tige à segments multiples (1, 1', 1").

13. Procédé selon l'une quelconque des revendications 11 à 12, comprenant l'étape d'éclairage du bord (2A, 4A) du segment d'extrémité tubulaire (2, 4).

14. Procédé selon la revendication 11 comprenant l'étape d'éclairage de la surface latérale (1A) de l'article en forme de tige à segments multiples (1, 1', 1").

15. Procédé selon l'une quelconque des revendications 11 à 14, comprenant l'étape de mesure de paramètres de l'article en forme de tige à segments multiples (1, 1', 1") comprenant deux segments remplis (3, 5) et deux segments d'extrémité tubulaires (2, 4), ladite lumière diffusée par le matériau du premier segment rempli (3) étant enregistrée afin de former le contour de la première surface avant (3A) du premier segment rempli (3), et ladite lumière diffusée par le matériau du second segment rempli (5) étant enregistrée afin de former le contour de la seconde surface avant (5A) du second segment rempli (5).
